Europäisches Patentamt

(19) European Patent Office

Office européen des brevets

(11) Publication number: **0 098 925**
**A1**

(12) **EUROPEAN PATENT APPLICATION**

(21) Application number: **83103693.4**

(22) Date of filing: **18.04.83**

(51) Int. Cl.³: **G 11 B 5/55**
**G 11 B 5/56**

(30) Priority: **22.06.82 US 391051**

(43) Date of publication of application:
**25.01.84 Bulletin 84/4**

(84) Designated Contracting States:
**BE CH DE FR GB IT LI NL SE**

(71) Applicant: **International Business Machines
Corporation
Old Orchard Road
Armonk, N.Y. 10504(US)**

(72) Inventor: **Holecek, Joseph James
Route 2 Box 164
Kasson Minnesota 55944(US)**

(72) Inventor: **Steen, Michael John
5 Gardner Court
Longmont Colorado 80501(US)**

(72) Inventor: **Zell, Michael Norman
3524 Ogden Court NE
Rochester Minnesota 55901(US)**

(74) Representative: **Petersen, Richard Courtenay
IBM Svenska AB Patent Operations Box 962
S-181 09 Lidingö(SE)**

(54) **Disk drive assembly method.**

(57) A disk drive is fabricated in such a manner as to have very little tracking error caused by manufacturing tolerances on the subassemblies making up the drive. In the disk drive, head (18) is carried by a swing arm head carrier (20) indexed to individual track positions by an indexing cam (24) having the same axis (54) of rotation as a disk spindle (16). The head (18) is positioned and fastened in its carrier (20) only by reference to the axis of rotation (54) after the carrier (20), cam and spindle (16) have been secured. The drive is fabricated by assembling the head carrier (20), the disk spindle (16) and the indexing cam (24) on the drive frame (31) and thereafter fastening the head (18) to the carrier (20). Prior to fastening the head to the carrier, the head is precisely referenced to the axis of rotation (54) of the recording disk and the indexing cam (24). The head is fastened to the carrier by an acrylic ultraviolet curing adhesive. The adhesive is applied between the head and the carrier before the head is positioned relative to the axis of rotation. After the head is in the proper position, the adhesive is cured by exposing it to ultraviolet light.

FIG. 5

EP 0 098 925 A1

BO9-81-035

1

## DISK DRIVE ASSEMBLY METHOD

This invention relates to methods for fabricating disk drive assemblies and to disk drive assemblies.

It is applicable to flexible disk drives and more particularly to drives for reading and writing information on single disks that are interchangeable between drives. The disks are usually contained in an envelope or cartridge and are often referred to as diskettes.

In such a disk drive, tracks on a disk are accessed by moving the head along the radius of the flexible disk. The head is usually carried by a pivoting arm or by a carriage moving along guide rails. The arm or carriage may be moved by a worm gear, a drive belt or a cam and cam-follower.

One example of a pivoting, head arm indexed by a cam and cam follower is shown in US-A-4,223,359 which discloses a spiral guide track on a disk to position the pivoting arm. The guide track disk is mounted about the same axis of rotation as the recording disk.

IBM Technical Disclosure Bulletin, Vol.22, No.9, February 1980, pages 4152 to 4154, discloses a stepped spiral track on a plate concentric with a recording disk. The track is engaged by a follower on a head carrier slidable on rods radial to the disk centre.

In IBM Technical Disclosure Bulletin Vol.23, No.11, April 1981, pages 5014 and 5015, there is shown a head positioning mechanism in which the head is carried on a carrier slidable on rods radial to a disk

2

centre with a cam follower engaged against the stepped surface of a cam rotatable about the disk centre.

In the past, disk drives have been fabricated by building a subassembly for the recording head carrier, which includes the recording head, and a subassembly for the recording disk spindle. As each subassembly is put together, the tolerances on the relative positions of parts in the subassembly can be tight. However, when these subassemblies are mounted in the drive frame, the position tolerance of the recording head relative to the recording disk spindle includes the tolerance of the head in the head carrier subassembly, the tolerance of the spindle in its subassembly, the tolerance of hte head carrier subassembly to the drive frame and the tolerance of the disk spindle subassembly to the drive frame. Therefore, assembly of the drive in the above manner results in an accumulation of all of these tolerances and has the effect of limited the track density at which the drive can operate.

The problem is to design a disk drive and fabricate it in a manner to reduce the tolerances on the relative position of the recording head to the recording disk spindle and thus to the tracks on the recording disk. This problem is particularly acute in a disk drive where the disks are interchangeable between drives.

The invention seeks to solve the above problem by fabricating the disk spindle, the head carrier and the head indexing cam as subassemblies on the drive frame before the magnetic head is fastened to the head carrier. The head is positioned on the head carrier with a single tight position reference to the spindle axis prior to fastening.

3

In addition, the head indexing cam is mounted coaxially with the disk spindle. As the disk spindle and the head indexing cam are thus mounted at a common point on the frame, thermal expansion or contraction of the frame will have no effect on the tracking accuracy of the recording head.

A significant advantage of this invention is that it reduces the worst case, position tolerance between spindle and read/write gap. This allows more reliable tracking when interchanging disks from drive to drive and thus permits a greater number of tracks per inch to be recorded on the disk.

The scope of the invention is defined by the appended claims; and how it can be carried into effect is hereinafter particularly described with reference to the accompanying drawings, in which :-

FIGURE 1 is a broken away isometric view of a disk drive, with a rigid disk cartridge in position for insertion into the drive;

FIGURE 2 is an isometric cutaway view of the disk drive;

FIGURE 3 is a cross section of a portion of the disk drive, showing a disk in the gripped position;

FIGURE 4 is a bottom plan view of the disk drive;

FIGURE 5 is a top plan view of the disk drive with some components removed;

FIGURE 6 is a view, similar to Fig.5, of another embodiment of disk drive; and

4

FIGURE 7 is an exploded isometric view of some components of another embodiment of disk drive.

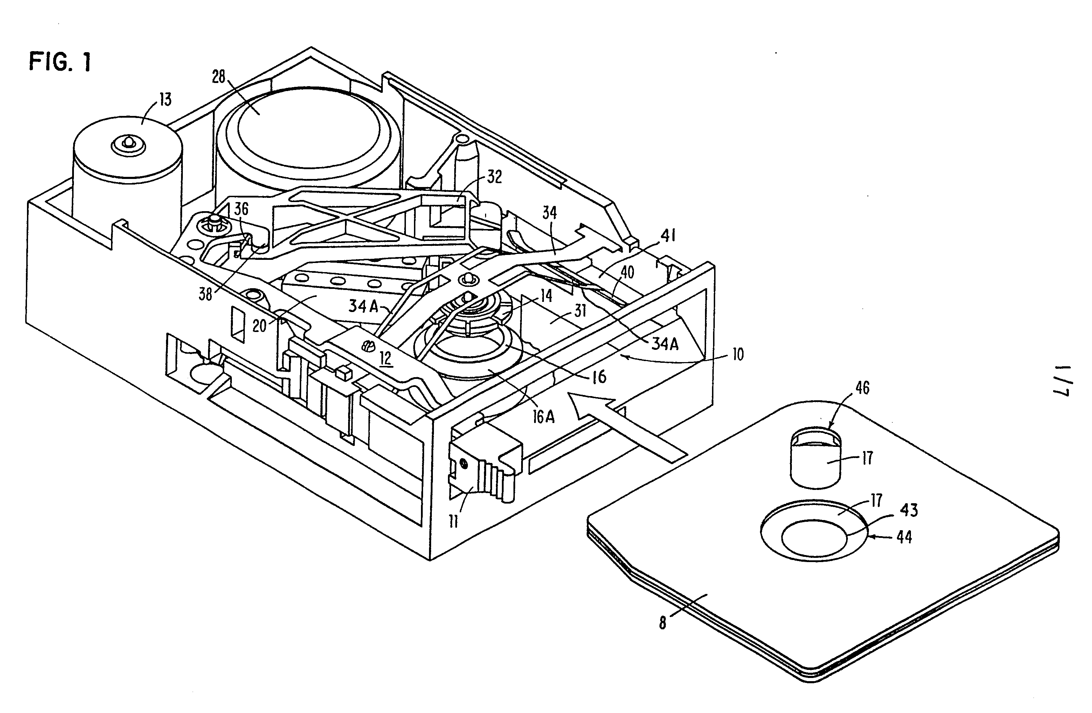

An embodiment of disk drive to which the invention is applicable, is intended for use with an exchangeable rigid, flexible disk cartridge 8 (Fig.1). The cartridge 8 has upper and lower walls forming a cavity in which is loosely housed a thin, flexible, floppy disk 17. Data tracks on the disk 17 are exposed through radially extending aligned slots in the upper and lower walls, one only of which (46) is illustrated. The upper and lower walls have central apertures forming a through-hole 44 exposing an annular portion of the disk 17 around a central aperture 43 which is smaller than the through-hole 44. The lower wall of the cartridge 8 contains a movable, radially extending cleaning pad (not shown) diagonally opposite to the slot 46.

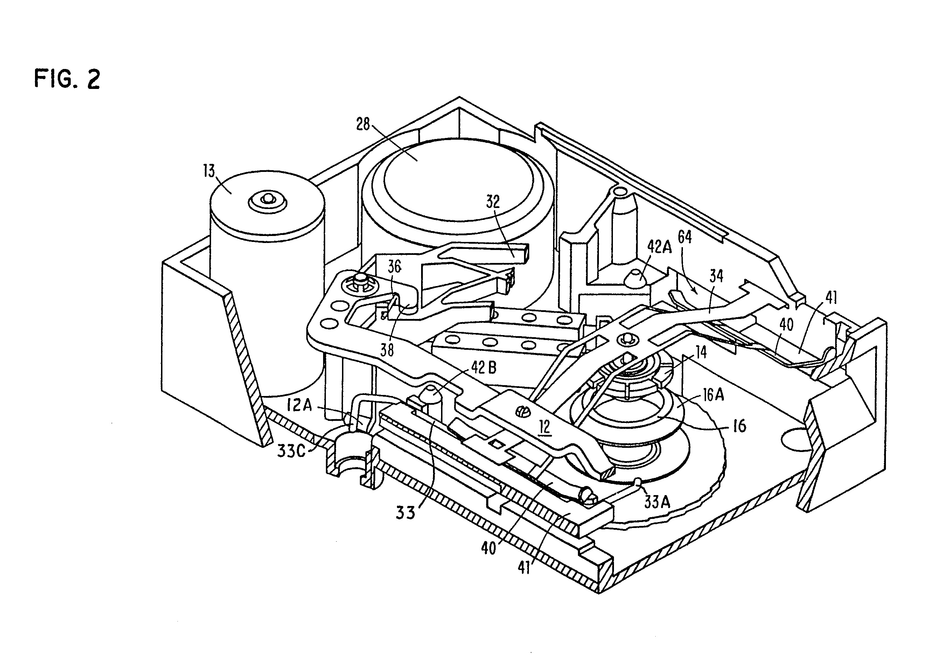

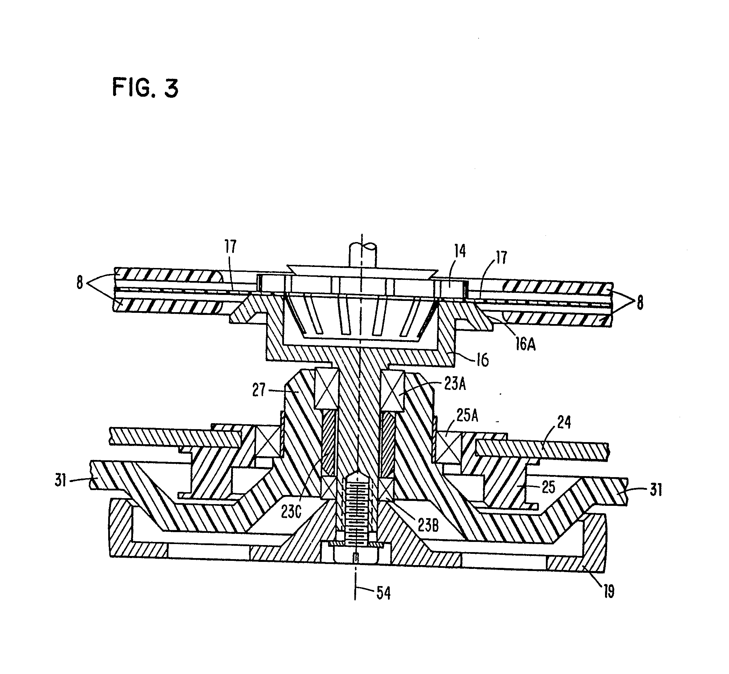

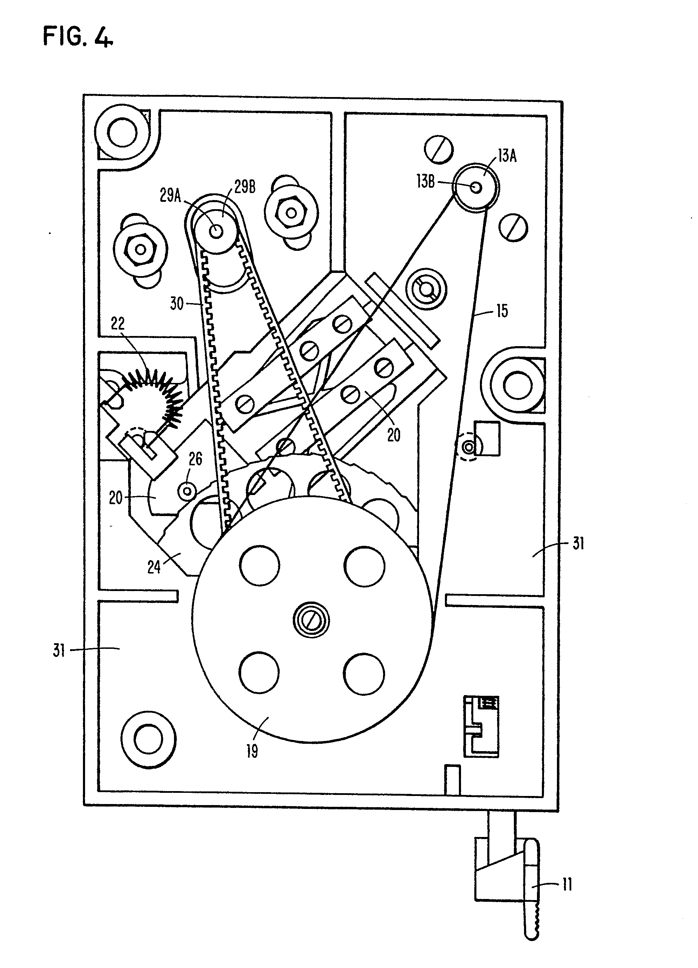

The disk drive (Fig.2) to accommodate such a cartridge has a slot 10 in the front, which is deeper than the depth of the cartridge. Within the slot, the drive has two fixed ledges 41, one at each side, which constitute guide and registration surfaces for the cartridge. Projecting up from the ledges 41 are two conical registration pins 42A and 42B, adapted to be engaged in registration recesses in the lower wall of a cartridge 8. A base frame 31 of the drive includes a hub 27 (Fig.3) in which the shaft of a spindle 16 is rotatably mounted on bearings 23A and 23B, separated by a spacer 23C. The spindle 16 has an annular top with outer bevelled face 16A, intersecting the path of a cartridge along the ledges 41. Below the base frame 31, the shaft on the spindle 16 carries a pulley 19 around which is entrained a belt 15 (Fig.4) drivingly connecting the pulley 19 to a drive pulley 13A on shaft 13B of a d.c. motor 13 (Fig.2) above the base frame 31.

5

A collet 14 (Fig.3) for engagement in the aperture 43 of a disk 17 is supported above and aligned with the spindle 16 by a leaf spring 34 (Fig.1) extending between side walls of the frame. The collet 14 is depressible to engage in the aperture 43 of a disk 17 to centre the disk and to clamp the disk to the rotatable spindle 16, by a pivoted lever 12 which is pivotable to engage and press down the spring 34 carrying with it the collet 14. The lever 12 is pivotable by a handle 11 from a position in which the lever lies along the side of the frame clear of the spring 34 and the handle is to one side of the slot 10 (Fig.1), to a position (not shown) in which the lever 12 extends across the middle portion of the spring 34 and the handle 11 is in the middle of the slot 10, blocking entry thereto.

Integral with the leaf spring 34 (Fig.1) are two pairs of spring fingers 34A which extend outwardly from the middle portion towards the side walls of the frame. The fingers 34A on each side carry at their ends a shaped guide plate 40. The shaped guide plates 40 are resiliently urged by the fingers 34A towards the ledges 41, and at their forward ends adjacent the slot 10 are inclined upwardly above the slot.

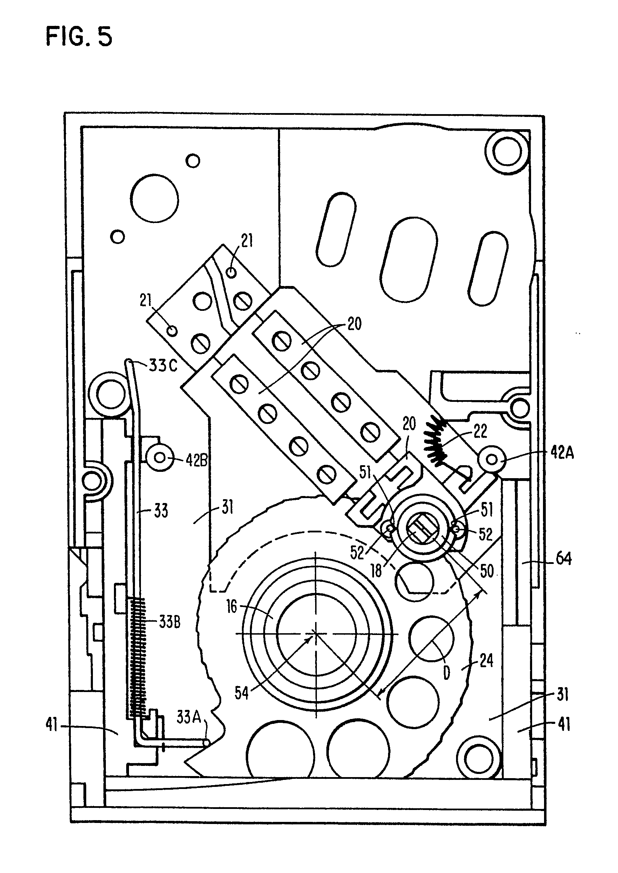

A magnetic transducing head 18 (Fig.5) is mounted for movement across the lower surface of a disk 17 substantially radially of the spindle 16 by a cantilevered flexure arm transducer carriage 20 fastened to the frame by pins 21. Such a carriage 20 is described in more detail in copending application 82111572.2 (EP-A-      ). The end of the arm of the carriage 20 carrying the head 18 is pushed radially towards the central axis 54 of the spindle 16 by a spring 22 and has a cam follower 26 (Fig.4) to engage against the periphery of a head indexing cam 24. The cam follower 26 is a shaft and roller bearing assembly below and slightly offset (1.43mm) from the head 18. The cam 24 (Fig.5) has a stepped cam surface with forty five steps and is rotatably mounted about the axis 54. Each of forty six cam dwells corresponds to a data track position on a disk 17. The cam 24 (Fig.3) is carried by a moulded pulley 25 rotatably mounted on the hub 27 by bearings 25A. The cam 24 is rotated by a positive drive belt 30 (Fig.4) engaging the pulley 25 and driven by pulley 29B mounted on shaft 29A of a stepper motor 28 (Fig.1). Operation of the stepper motor 28 enables the cam 24 to move the cam follower 26 to index the head 18 to each track. The head 18 projects above the ledges 41 and in its movement is held at the same distance above the plane of the ledges by the carriage 20.

Above the transducer carriage 20 (Fig.1) is a pressure pad arm 32 which carries at its free end a pressure pad (not shown) which can enter the slot 46 in the upper wall of a cartridge 8 to bear down on the upper surface of the disk 17 in alignment with the head 18. The arm 32 is normally spring-loaded down to hold a disk 17 against the head 18 by a spring whose end 36 is engaged by a finger 38 on the lever 12 when the latter is in the open position (Fig.1) along the side wall of the frame. By such engagement the arm 32 is lifted clear of the path of the cartridge 8 on the ledges 41.

A rod 33 (Fig.5) is pivotally mounted in the frame 31 below the open position of the lever 12. The rod 33 is bent to one side and upward at its forward end to form a probe 33A (Fig.2) in alignment with cleaning pad in a cartridge 8 in the drive. At its other end, the rod 33 is bent downwardly to form a cam follower 33C. A coil spring 33B (Fig.5) surrounds the rod 33 and normally biases the rod to lift the probe 33A towards the cartridge. The lever 12 carries a depending cam 12A (Fig.2) which engages the cam follower 33C in the open position of the lever 12 to pivot the rod 33 against the bias of the spring 33B and to depress the probe 33A below the ledges 41.

To load a cartridge 8 (Fig.1) into the drive, the lever 12 is moved left by the handle 11 to the open position. This opens the slot 10, raises collet 14 and head pressure-pad arm 32 and depresses cleaning-pad pressure probe 33A out of the insertion path of the cartridge.

The cartridge 8 is inserted through the slot 10 onto the ledges 41 and pushed in until the front edge engages the bevelled face 16A of the spindle 16. The front edge has previously engaged the guide plates 40 and lifted them against the light bias of the spring fingers 34A. Thereafter the plates 40 apply the light pressure of fingers 34A to press the cartridge downwardly.

As the cartridge 8 is pushed further into the drive, the front edge rides up the bevelled face 16A of the spindle 16 and the cartridge tilts upwardly, being held against the spindle by the plates 40.

Further movement of the cartridge 8 into the drive allows the plates 40 to pivot the cartridge onto the top of the spindle 16 and against the upper edge of the slot 10. The cartridge 8 continues to ride across the top of the spindle 16 until the aperture 44 begins to clear the spindle.

Before clearing the spindle, the front edge of the cartridge 8 passes clear over the head 18 and strikes the conical registration pins 42A and 42B (Fig.2). The front edge is then lifted by the pins and the aperture 44 allows the cartridge to slip down over the spindle 16 and onto the lower edge of the slot 10, due to the pressure of the guide plates 40.  The pins 42A and 42B continue to lift the cartridge clear of the head 18 until the read/write access slot in the lower wall of the cartridge is over the head.

The loading operation is completed when the cartridge is pushed forward so that the recesses can slip down over the registration pins 42A and 42B.

As the recesses in cartridge 8 register with the pins, the cartridge snaps down into a registered position over pins 42A and 42B and against guide and registration ledges 41.  The guide plates 40 continue to provide the downward bias pressure to snap the cartridge 8 over the registration pins.  This snap action gives the operator positive tactile and auditory feedback that cartridge 8 has indeed registered in the drive.

When recess 60 has reached pin 42A, and the cartridge 8 snaps down into the registered position, the read/write access slot in the cartridge will be in a position such that head 18 can penetrate into the plane of the disk within the cartridge.  With the cartridge properly registered on pins 42A and 42B, handle 11 is moved to the right to pivot the lever 12 to the closed position to centre and clamp the disk on the spindle (Fig.3), to lower the pressure pad arm and to raise the cleaning pad probe.

The registration geometry of the cartridge 8 and the drive, when the cartridge is fully inserted and aligned by registration pins 42A and 42B, is such that registration recesses fit over registration pins 42A and 42B, respectively.  Cartridge 8 is fixedly positioned relative to rotation axis 54 for disk 17.

As the lever 12 moves to the closed position after cartridge 8 is inserted, finger 38 moves away from spring end 36. This allows the arm bias spring underneath arm 32 to pull the arm down against the upper surface of disk 17, so that the pressure pad protrudes through slot 46 in cartridge 8 to hold the disk against the recording head. The head 18 protrudes into the plane of the disk from the bottom of the disk drive through the corresponding slot in the bottom wall of cartridge 8.

Movement of the load lever 12 to the closed position presses leaf spring 34 down. This puts increased pressure on spring fingers 34A and guide plates 40 to register the cartridge firmly on conical pins 42A and 42B and hold the bottom of the cartridge flat against the guide and registration ledges 41. Depression of the leaf spring 34 also moves the collet 14 down through the aperture 43 of disk 17 and clamps disk 17 to spindle 16.

Movement of the lever 12 to the closed position also raises probe 33A to put pressure on a cleaning pad in the bottom wall of cartridge 8. The cam 12A is moved away from the cam follower 33C, allowing the spring 33B to bias the rod 33 to lift the probe 33A.

The cartridge is withdrawn by reversing the loading procedure. The lever 12 is moved to the left (Fig.1) by the handle 11. This allows the spring 34 to lift collet 14, and moves the finger 38 and cam 12A to lift the pressure pad arm 32 and lower the probe 33A away from cartridge 8. The cartridge can then be pulled from the drive manually. As the cartridge starts to come out of the drive, its front edge rides up on the registration pins 42A and 42B and over spindle 16. Thus, the rigid shell of cartridge 8 lifts it clear of spindle 16 and head 18 as the cartridge rides up on pins 42 and

10

spindle 16. Then the cartridge is easily pulled out. Initial release can be assisted by slightly tilting the cartridge against the downward bias of plates 40.

It will now be appreciated that the disk drive assembly has a frame 31 on which are mounted three sub-assemblies, the head arm 20, the head indexing cam 24 and the spindle 16. The cam 24 and spindle 16 are independently rotatable about a common axis 54, and the head arm 20 is positionable in relation to the axis of rotation of the spindle by interengagement of the cam follower 26 with the cam 24. Rotation of the cam thus positions the head 18 carried by the arm 20 in relation to a track position on a disk carried by the spindle.

According to the invention, the three sub-assemblies are mounted on the frame, and the head is subsequently accurately positioned on the arm in relation to the rotational axis of the spindle and secured in that position.

The head 18 is part of a component shaped somewhat like a button. As shown in Fig.5, this head button 50 has notches 51 that loosely mate with pins 52 on the end of the arm 20. The pins 52 serve to position the head coarsely on the arm 20. With the head coarsely but loosely positioned on arm 20 the cam 24 is rotated to a centre position with the cam follower 26 (Fig.4) engaging the central cam dwell. Thus the arm is located at a centre position by cam 24, and the head should be positioned relative to the centre-track position of a disk on the spindle. The head 18 is then moved relative to the arm 20 within a range constrained by pins 52 to a point where it is a precise predetermined distance D from the common axis 54 of spindle 16 and cam 24. At the same time, the head 18 may also be adjusted in other directions, for example it may also be rotated to a predetermined optimum angular position for reading and writing tracks on the disk. Once the head is in the proper position relative to axis 54, it is fastened in place on the end of arm 20.

In a preferred method, the head is fastened in place by an acrylic ultraviolet curing adhesive. This adhesive is applied between the head and the arm 20, when the fastener is coarsely positioned on the latter, but does not immediately set and permits relative movement in the uncured state. When the head is in the proper position, ultraviolet light shining on the adhesive will cause it to cure and fasten the head in place on arm 20. Such an acrylic adhesive is available from Loctite Corporation as the LO-580 adhesive.

It will be appreciated that whilst the precise positioning of the head relative to the spindle/cam axis may be accomplished simply by measuring from the centre of the spindle to the head gap and subsequently moving the head to the proper predetermined distance, a preferred method of accomplishing this precise positioning is described in copending application 83103561.3 (EP-A-    ).

This describes an automated system for installing head 18 at the end of arm 20. An alignment test disk with fortysix tracks numbered 0 to 45 has a precisely positioned recorded track at track 22 (centre track) and is clamped to spindle 16. With the test disk being spun by the disk spindle and the cam 24 in such a position that the head location on the the head transport arm 20 is positioned at track 22, the head 18 is used to read the alignment track. Head 18 is held in position by two fingers on a robotic arm extending through opening 64 (Fig.2) in the sidewall of the drive frame. The fingers grip head 18 and the robot can move the robotic arm to move the head in a plane

12

parallel to the plane of the disk, at right angles thereto, and about roll and pitch axes.

The head 18 is positioned a predetermined radial distance from axis 54 of spindle 16 by moving the head in a plane parallel to the plane of the disk until the signal read from the alignment track indicates the head is centred on the track. Similarly, the angular position (azimuth) of the head and the tangential position of the head relative to the track are adjusted until the head is in an optimum signal position. The same method can be used to adjust the head in its roll and pitch positions by angular rotation and in its disk penetration parameter. This fine position adjustment of the head by the robotic arm is small and is within the amount of adjustment permitted by the play between notches 51 and pins 52 shown in Fig.5.

After precise positioning of the head at a predetermined azimuth angle, tangential point, pitch, roll and penetration to the track on the text disk, the head 18 is held properly positioned by the robotic arm, and is fastened to the end of the flexure arm 20 by the application of ultraviolet light to the adhesive by a UV source carried by the robotic arm. When the head is in the proper position at the end of arm 20, the ultraviolet light source is turned on. Ultraviolet light activates the curing of the acrylic adhesive LO-580, which is in the notches 51 around the pins 52 and between the head button 50 and the end of the arm 20.

Other forms of head positioning mechanism than the flexure arm 20 may be used. Thus a pivoted rigid arm mounted on frame 31 could carry head 18 at its tip.

13

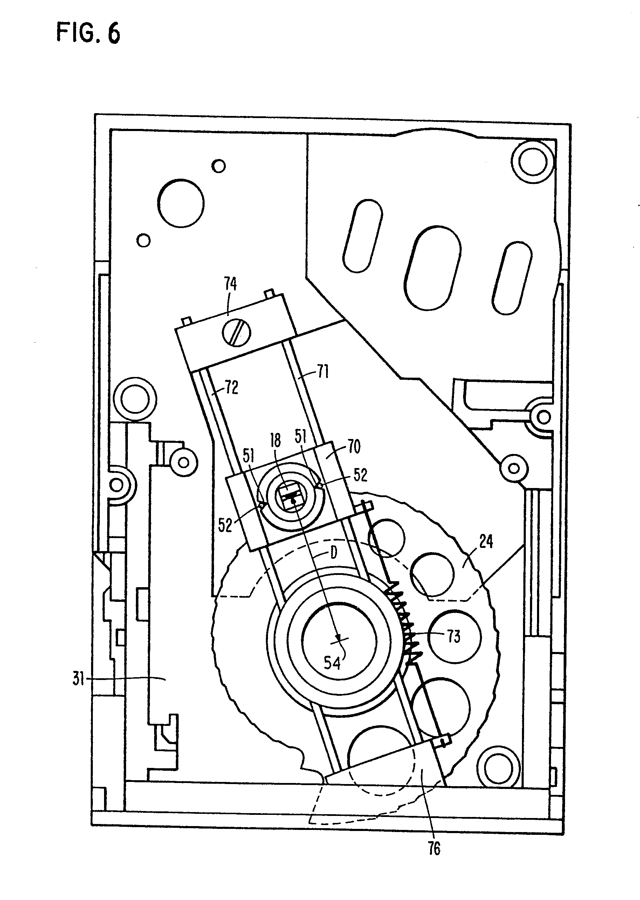

Alternatively, a head carriage 70 (Fig.6) may be slidable on fixed rails 71 and 72 along a radial line through the axis of rotation 54. In this case, head 18 is carried by carriage 70 which has a cam follower directly under the head following the peripheral surface of track indexing cam 24. The cam follower is held against the surface of cam 24 by spring 73 that pulls carriage 70 towards axis 54.

The disk drive would otherwise be similar to the drive described in relation to Figs. 1 to 5 except that the access slot in the cartridge for the head and the head pressure pad would be moved, and the pressure pad, itself, would have to be moved. The assembly of the disk drive would also be similar. The head carriage 70 and its rails 71 and 72 and mounting frames 74 and 76 are all mounted on the frame 31 of the drive before head 18 is fastened in position on the carriage. Once the head transport sub-assembly is attached to the frame 31 and the cam and spindle sub-assemblies are attached to the frame 31, the head 18 is again coarsely held in position by pins 52. The head is precisely positioned a predetermined radial distance D from axis 54 and then fastened on carriage 70 as before.

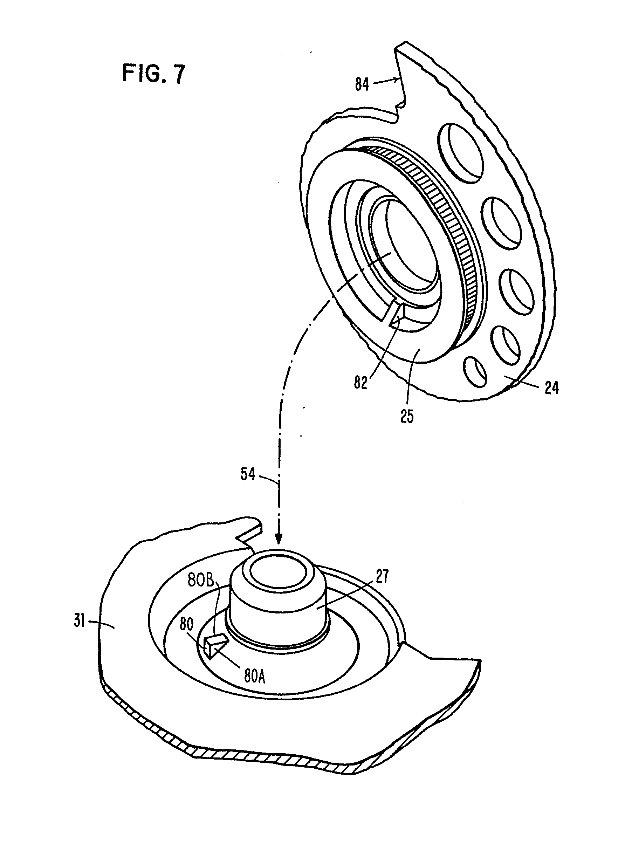

In either of the preferred embodiments, it is desirable to provide a cam stop to prevent cam overtravel. Cam overtravel would result in the cam follower on the head arm or head carriage striking or dropping off the end 84 (Fig.7) of the cam. In either event, the head or the head carrier could be damaged. In addition and more importantly, it is desirable to use a cam stop to define a home track position. Both of these functions can be accomplished by a fixed cam stop 80 on the frame 31 and a stop engaging rib 82 on the pulley 25.

In Fig.7, cam 24 and pulley 25 are shown lifted off hub 27 and tilted upward, so that the underside of the cam is visible. Pulley 25 for

14

the timing belt that drives the cam 24 is moulded onto the cam with a rib 82 on the inner surface. The rib 82 is triangular in cross section and radial to the axis 54. When cam 24 is mounted on hub 27, rib 82 limits the rotation of cam 24 by striking camm stop 80. A triangular cam stop 80 with engagement surfaces 80A and 80B radial to the axis 54 is preferably moulded into the frame 31 adjacent hub 27.

In operation, cam 24 rotates clockwise until rib 82 strikes surface 80A of cam stop 80. This position corresponds to the head being under the innermost track position of a disk. When the cam rotates counterclockwise, rib 82 eventually strikes the opposite surface 80B of cam stop 80, corresponding to the head being located at the outermost track of the disk. Thus rib 82 by engaging cam stop 80 prevents the head carrier from striking or falling off end 84 of cam 24.

In addition, surface 80A of cam stop 80 that engages rib 82 is precisely positioned along a radial line of axis of rotation 54 so as to define the home track position for the head. Preferably, the home track is the innermost track on the disk. It is necessary during power-on-reset of the disk drive to reference the head position by driving the head to the home track position. This may be most easily accomplished by driving the stepper motor 28 (Fig.1) in a direction and for a predetermined number of steps sufficient to ensure that rib 82 strikes against cam stop 80.

The angular position of surface 80A relative to axis of rotation 54 defines the home reference position when rib 82 of cam 24 is driven up against surface 80A. As the position of the head and the cam are not known at power-on-reset, it is assumed that the head is at the outermost track position. Cam 24 is stepped clockwise enough times

15

to move the head to the home track position. Rib 82 may strike surface 80A many times during each power-on-reset.

Typically, the stepping motor has four phases, and for each track one of these phases is predetermined to be the centre-of-track phase. During this "centre" phase, the head should be near the centre of the track it is reading or writing. The positions and sizes of rib 82 and cam stop 80 are chosen so that they will engage during the centre phase of the stepping motor for the home track. After the last step by the stepping motor to drive rib 82 against surface 80A of cam stop 80, the stepping motor will be set to the centre phase for the home track. This ensures that the recording head will be near the centre of the home track.

16

CLAIMS

1    Method for fabricating a disk drive assembly having a frame (31) a head (18), a head carrier subassembly (20), a head indexing cam subassembly (24,25), and a disk spindle subassembly (16), in which the head carrier subassembly (20), the spindle subassembly (16) and the head indexing cam subassembly (24,25) are secure in position on the frame, with the spindle and indexing cam subassemblies on a common hub (27) to have the same axis (54 of rotation, characterised by adjusting the position of the head (18) on the head carrier subassembly (20) relative to the axis of rotation after the head carrier, spindle and indexing cam subassemblies have been attached to the frame, with the head carrier subassembly in a predetermined position relative to the axis of rotation, and thereafter fastening the head to the head carrier subassembly.

2    A method according to claim 1, characterised by initially coarse positioning the head on the head carrier subassembly, and then automatically fine positioning the head on the carrier subassembly, and then automatically fine positioning the head on the carrier subassembly.

3    A method according to claim 2, characterised in that the positioning step comprises the steps of positioning the head a predetermined radial distance from the axis of rotation, and positioning the head at an optimum angle relative to a recorded track on a revolving disk on the spindle.

4    A method according to claim 1,2 or 3, characterised in that fastening is by bonding the head to the carrier assembly with an adhesive.

5    A method of claim 4, wherein the adhesive is an acrylic adhesive curable by ultraviolet light, which is applies in uncured state between the head and the carrier subassembly, and is cured by the application of ultraviolet light after the head has been properly positioned on the carrier subassembly.

6    A disk drive assembly fabricated by a method according to nay of claims 1 to 5.

7    A disk drive assembly having a rotatable disk spindle subassembly (16), a head carrier subassembly (20) to carry a head (18) to transduce information on a disk on the spindle subassembly, a head cam indexing subassembly (24,25) for positioning the head carrier subassembly so that the head is adjacent an information track on the disk and a frame (31) for supporting the spindle, head carrier and head cam and said transducer indexing subassemblies, characterised in that the spindle and head cam indexing subassemblies are mounted coaxially and rotatably on the frame so that said disk and indexing cam have the same axis of rotation, and the head is mounted on the carrier subassembly at a position referenced to the axis of rotation.

8    An assembly according to claim 7, in which the head is referenced to the position of a recorded track on a prerecorded test disk mounted on the rotating spindle before the head is fastened to the carrier subassembly.

9     An assembly according to claim 8, in which the head is fastened to the carrier subassembly by an acrylic adhesive cured by ultraviolet light after the head is properly positioned.

10     An assembly according to claim 7, 8 or 9, in which the carrier subassembly includes a cam follower (26) and is biased by biasing means (22) so that the cam follower rides in contact with a stepped surface on the indexing cam.

11     An assembly according to claim 10, in which the indexing cam contains a dwell for each track on a disk, whereby the head may be indexed to individual concentric tracks on a disk by rotation of the cam.

12     An assembly according to claim 11, including a cam stop (80) mounted on the frame (31) radial to the axis (54) of rotation and stop engaging means (82) on the cam to engage the cam stop to limit the rotation of the cam.

13     An assembly according to claim 12, in which the cam stop is positioned at a predetermined angular position relative to the axis of rotation in order to define a home track position for the head, when the stop engaging means strikes the cam stop and limits the rotation of the cam in one of the directions of rotation of the cam.

FIG. 1

1/7

0098925

FIG. 2

FIG. 3

FIG. 4

FIG. 5

FIG. 6

FIG. 7

**European Patent Office**

**EUROPEAN SEARCH REPORT**

Application number

EP 83 10 3693

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 049 943 (MITSUBISHI) * Page 14, line 19 - page 17, line 16; figures 3, 4 * | 1,3,4 | G 11 B 5/55 G 11 B 5/56 |
| A | DE-A-3 039 198 (STANDARD ELEKTRIK LORENZ) * Page 3, lines 1-12; figure 2 * | 10-11 | |
| A | IBM TECHNICAL DISCLOSURE BULLETIN, vol. 21, no. 12, May 1979, New York R.C. BAUCK et al. "Head adjustment for disk", pages 4781-4782 * Last paragraph; figure * | 8 | |
| A | US-A-4 071 867 (I. PEJCHA) * Column 3, line 40 - column 4, line 43; figures 3-4 * | | **TECHNICAL FIELDS SEARCHED (Int. Cl. 3)** |
| A,P | GB-A-2 100 051 (PHILIPS) * Page 4, lines 7-30 * | | G 11 B 5/00 G 11 B 21/00 |

The present search report has been drawn up for all claims

| Place of search BERLIN | Date of completion of the search 14-09-1983 | Examiner ROGNONI M.G.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

          

& : member of the same patent family, corresponding document